# EUROPÄISCHE PATENTSCHRIFT

(11) **EP 4 182 558 B1**
(45) Veröffentlichungstag und Bekanntmachung des Hinweises auf die Patenterteilung: **03.04.2024**
(21) Anmeldenummer: 21740569.5
(22) Anmeldetag: 13.07.2021
(51) Int. Cl.: F03D 15/00, F16D 3/18

(54) **WINDKRAFTANLAGE MIT GENERATORGETRIEBE UND ROTORWELLENANORDNUNG**
WIND TURBINE COMPRISING A GENERATOR GEARBOX AND A ROTOR SHAFT ARRANGEMENT
ÉOLIENNE COMPRENANT UNE BOÎTE À ENGRENAGES DE GÉNÉRATEUR ET UN AGENCEMENT D'ARBRE DE ROTOR

(30) Priorität: 17.07.2020 EP 20186499
(43) Veröffentlichungstag der Anmeldung: 24.05.2023
(73) Patentinhaber: Flender GmbH, 46395 Bocholt (DE)
(72) Erfinder: DINTER, Ralf Martin, 45888 Gelsenkirschen (DE)
(74) Vertreter: Michalski Hüttermann & Partner Patentanwälte mbB
(86) Internationale Anmeldenummer: PCT/EP2021/069460
(87) Internationale Veröffentlichungsnummer: WO 2022/013219

(56) Entgegenhaltungen:
- DE-A1-102009 048 735
- DE-B- 1 142 473
- US-A- 3 142 972
- US-A1- 2011 272 214

## Beschreibung

Die Erfindung betrifft eine Windkraftanlage mit einen Mehrblattrotor, der drehbar an einer Gondel angeordnet ist und über eine Hauptwelle mit einem Generatorgetriebe drehmomentübertragend verbunden ist, wobei das Generatorgetriebe eine Getriebeeinheit und eine damit lösbar verbundene Generatoreinheit, die drehmomentübertragend über eine Rotorwellenanordnung mit einer Ausgangswelle und einer Rotorwelle miteinander verbunden sind, umfasst.

Die Druckschrift US 2011/272214 A1 offenbart ein Generatorgetriebe, das eine Getriebeeinheit und eine Generatoreinheit umfasst. Eine Sonnenwelle einer Planetenstufe ist an einem generatorseitigen Ende mit einer Verzahnung versehen, die zu einer Kupplung gehört, die eine Verbindung zu einer Rotorwelle herstellt. Die Kupplung ist gewölbt ausgebildet, um einen Versatz zwischen der Sonnenwelle und der Rotorwelle auszugleichen. Radial zu der Verzahnung beabstandet ist die Rotorwelle über Lager gelagert, die auftretende Axialkräfte abstützen können.

Die Internationale Patentanmeldung WO 02/081280 A1 zeigt einen Fahrzeugantrieb, bei dem eine Rotorwelle eines Antriebsmotors über eine Bogenzahnkupplung mit einem Getriebe verbunden ist. Die Rotorwelle ist in der Bogenzahnkupplung in einer innenverzahnten Komponente aufgenommen, die mit einem Getrieberitzel verbunden ist.

Es sind Bogenzahnkupplungen bekannt, bei denen an axialen Enden eines Kupplungszwischenstücks Deckel neben den Bogenverzahnungen angeordnet sind. Durch die Deckel wird eine Abdichtung der Bogenzahnkupplung gegen einen Austritt von Schmierstoff gewährleistet.

Aus DE 10 2009 048735 A1, DE 11 42 473 B und US 3 142 972 A sind Wellenkupplungen mit einer Bogenzahnkupplung bekannt. In unterschiedlichen Anwendungen besteht Bedarf an Verbindungen zwischen Wellen, die dazu geeignet ist, hohe Antriebsleistungen zu übertragen und einen Winkelversatz auszugleichen. Gleichzeitig besteht die Zielsetzung, derartige Verbindungen kompakt auszubilden. Dies gilt in besonderem Ausmaß für Windkraftanlagen, in denen ein Getriebe mit einem Generator zu verbinden ist, beispielsweise in einem integrierten Generatorgetriebe. Ebenso wird eine einfache und wirtschaftliche Herstellung solcher Lösungen angestrebt. Der Erfindung liegt die Aufgabenstellung zugrunde, eine Rotorwellenanordnung bereitzustellen, die in zumindest einem der skizzierten Punkte eine Verbesserung bietet.

Die Lösung der Aufgabe erfolgt durch eine Windkraftanlage mit den Merkmalen des Anspruchs 1.

Bevorzugte Ausgestaltungen der Erfindung sind in den Unteransprüchen definiert.

Eine Beschreibung eines Merkmals gemeinsam mit einem anderen Merkmal erfolgt nur aus Gründen der vereinfachten Darstellung und soll nicht ausschließen, dass das jeweilige Merkmal auch ohne das andere Merkmal eine Weiterbildung der Erfindung darstellen kann.

Die Aufgabenstellung wird gelöst durch eine erfindungsgemäße Windkraftanlage, mit einem Mehrblattrotor, der drehbar an einer Gondel angeordnet ist und über eine Hauptwelle mit einem Generatorgetriebe drehmomentübertragend verbunden ist, wobei das Generatorgetriebe eine Getriebeeinheit und eine damit lösbar verbundene Generatoreinheit umfasst, die drehmomentübertragend über eine Rotorwellenanordnung miteinander verbunden sind. Die Rotorwellenanordnung umfasst eine Ausgangswelle für die Getriebeeinheit und eine Rotorwelle für die Generatoreinheit. Die Getriebeeinheit und die Generatoreinheit sind im montierten Zustand mit einer Bogenzahnkupplung drehmomentübertragend miteinander verbunden. Dazu ist die Bogenzahnkupplung mit der Ausgangswelle und der Rotorwelle verbunden. Dabei kann die Ausgangswelle mittels der Bogenzahnkupplung teilweise in der Rotorwelle aufgenommen sein oder die Rotorwelle mittels der Bogenzahnkupplung teilweise in der Ausgangswelle aufgenommen sein. Die Bogenzahnkupplung umfasst auch zumindest ein Stützelement. Das zumindest eine Stützelement ist zu einem axialen Positionieren der Bogenzahnkupplung ausgebildet und ist lösbar befestigt. Das zumindest eine Stützelement ist zu einem Begrenzen einer relativen axialen Beweglichkeit der Bogenzahnkupplung, und damit der Rotorwelle bezüglich der Ausgangswelle, ausgebildet. Das mindestens eine Stützelement weist eine Axialkräfte der Bogenzahnkupplung abstützende Gegenfläche auf, wobei die Gegenfläche bei einem Verkippen der Ausgangswelle relativ zur Rotorwelle an einer korrespondierenden Stützfläche der Ausgangswelle oder der Rotorwelle abgleitbar ausgestaltet ist. Dadurch kann ein Verkippen der Ausgangswelle relativ zur Rotorwelle zugelassen werden, um einen Winkelversatz auszugleichen, wobei gleichzeitig eine Abtragung von Axialkräften über das mindestens eine Stützelement bereitgestellt wird, um eine axiale Relativbewegung des Ausgangswelle zur Rotorwelle zu begrenzen und insbesondere ein axiales Wegwandern der der Ausgangswelle aus einer drehmomentübertragenden Koppelung mit der Rotorwelle zu verhindern. Dementsprechend kann im Betrieb ein axiales Wandern der Rotorwelle auf der Ausgangswelle vermieden werden. Dementsprechend kann die Bogenzahnkupplung entlang einer Axialrichtung, also im Wesentlichen entlang einer Hauptdrehachse der Getriebeeinheit und/oder Generatoreinheit, kompakt ausgebildet werden. Ebenso ist die Rotorwelle damit in einer fliegenden Lagerung aufnehmbar. Das axiale Positionieren der Bogenzahnkupplung gewährleistet eine leichtgängige Beweglichkeit und ermöglicht ein einstellbewegliches, insbesondere winkeleinstellbewegliches, Verhalten zwischen der Ausgangswelle und der Rotorwelle. Das zumindest eine Stützelement ist separat in einfacher Weise herstellbar und erlaubt eine schnelle Montage und Demontage eines Generatorgetriebes mit einer Getriebeeinheit und Generatoreinheit.

Das zumindest eine Stützelement kann ein erstes Stützelement und/oder ein zweites Stützelement umfassen. Das heißt, die Menge des zumindest einen Stützelements kann genau ein erstes Stützelement, genau ein zweites Stützelement sowie sowohl das erste Stützelement als auch das zweite Stützelement umfassen. Vorzugsweise ist gleichzeitig nur das erste Stützelement und das zweite Stützelement vorgesehen, so dass ein drittes Stützelement und weitere Stützelemente vermieden sind. Insbesondere sind das erste Stützelement und das zweite Stützelement an unterschiedlichen axialen Enden der Bogenzahnkupplung vorgesehen, wobei insbesondere das erste Stützelement und das zweite Stützelement bei der Montage mit einem Bewegungsanteil in axialer Richtung aufeinander zu bewegbar sind, um ein axiales Spiel der Rotorwelle bezüglich der Ausgangswelle, insbesondere im Bereich der Bogenzahnkupplung, zu eliminieren oder auf ein vordefiniertes axiales Spiel zu begrenzen, beispielsweise um eine axiale Spielpassung vorzusehen und/oder eine im laufenden Betrieb zu erwartende axiale Wärmedehnung der Rotorwelle und/oder Ausgangswelle ausgleichen zu können.

Das erste Stützelement und das zweite Stützelement können auf einem vordefinierten axialen Abstand zueinander vorgesehen sein. Grundsätzlich ist es möglich, dass die axiale Relativlage der Stützelemente relativ zur Rotorwelle und zur Ausgangswelle nicht vordefiniert ist, sondern stattdessen von einem durch die Bogenzahnkupplung auszugleichenden Winkelversatz abhängt. Hierzu kann eine von der Bogenzahnkupplung wegweisende Abstützstelle des jeweiligen Stützelements axial verlagerbar ausgestaltet sein, beispielsweise mit Hilfe einer mit der Rotorwelle oder mit der Ausgangswelle angreifenden Schraubeinrichtung.

Das mindestens eine Stützelement, insbesondere das erste Stützelement und/oder das zweite Stützelement, weist die bei einem Verkippen der Ausgangswelle relativ zur Rotorwelle zum Ausgleich eines Winkelversatzes mit Hilfe der Bogenzahnkupplung an der Bogenzahnkupplung abgleitbare Gegenfläche auf, die an der korrespondierenden Stützfläche der Ausgangswelle oder der Rotorwelle im Bereich der Bogenzahnkupplung abgleiten kann. Die Bogenzahnkupplung kann einen gebogenen Bereich aufweisen, der in einem inneren Teilbereich mit einer Verzahnung versehen ist und an einem sich an dem inneren Teilbereich anschließenden äußeren Teilbereich durch die Ausgangswelle oder die Rotorwelle die mit dem mindestens einen Stützelement zusammenwirkende Stützfläche ausbildet. Vorzugsweise ist die Stützfläche durch einen unverzahnten gebogenen Bereich der von der Ausgangswelle oder von der Rotorwelle ausgebildeten Kupplungspartner der Bogenzahnkupplung ausgebildet. Beispielsweise sind die Stützfläche und die Gegenfläche als aneinander abgleitbare, insbesondere ringförmige, Kugelkalotten ausgestaltet. Die Stützfläche und die Bogenzahnkupplung können in der Art einer Kugelpfannenlagerung aneinander abgleiten. Dadurch kann ein Verkippen der Ausgangswelle relativ zur Rotorwelle zugelassen werden, um einen Winkelversatz auszugleichen, wobei gleichzeitig die Abtragung von Axialkräften über das mindestens eine Stützelement bereitgestellt wird, um eine axiale Relativbewegung des Ausgangswelle zur Rotorwelle zu begrenzen und insbesondere ein axiales Wegwandern der der Ausgangswelle aus einer drehmomentübertragenden Koppelung mit der Rotorwelle zu verhindern. Vorzugsweise ist die Ausgangswelle mit der Rotorwelle durch das mindestens eine Stützelement axial verliersicher gekoppelt.

Besondres bevorzugt ist vorgesehen, dass das erste Stützelement und das zweite Stützelement mit den zugeordneten Stützflächen eine Kugelgelenklagerung für die Bogenzahnkupplung ausbilden. Ein axiales Spiel kann dadurch minimiert werden, wobei gleichzeitig ein Verkippen der Ausgangswelle relativ zur Rotorwelle zum Ausgleich eines Winkelversatzes zugelassen ist, aber auftretende Axialkräfte bereits im Bereich der Bogenzahnkupplung an der ausgebildeten Kugelgelenklagerung abgestützt werden können.

Insbesondere bildet das zumindest eine Stützelement ein zum Ausgleich von im laufenden Betrieb zu erwartenden axialen Wärmedehnungen ausgleichendes axiales Spiel der Ausgangswelle relativ zur Rotorwelle aus. Insbesondere ist zwischen den jeweiligen Stützflächen und der mit der jeweiligen Stützfläche zusammenwirkenden Gegenfläche des jeweiligen Stützelements ein axiales Spiel, insbesondere in der Größenordnung einer Spielpassung, vorgesehen, so dass die Bogenzahnkupplung bei zu erwartenden Wärmedehnungseffekten nicht zwischen dem ersten Stützelement und dem zweiten Stützelement verklemmen kann.

In einer weiteren Ausführungsform der Rotorwellenanordnung ist ein erstes Stützelement einer der Getriebeeinheit zugewandten Seite der Bogenzahnkupplung angeordnet. Dementsprechend ist die Beweglichkeit zwischen der Rotorwelle und der Ausgangswelle in einfacher Weise einseitig einschränkbar und die Bogenzahnkupplung in einer bestimmungsgemäßen Lage zentrierbar. Alternativ oder ergänzend kann ein zweites Stützelement auf einer der Generatoreinheit zugewandten Seite der Bogenzahnkupplung angeordnet sein. Dadurch ist die Beweglichkeit zwischen der Rotorwelle und der Ausgangswelle in einfacher Weise einseitig einschränkbar. Auch hierdurch wird die Bogenzahnkupplung in einer bestimmungsgemäßen Lage, die eine leichtgängige Winkeleinstellbarkeit zwischen der Rotorwelle und der Ausgangswelle gewährleistet. Eine Kombination des ersten und zweiten Stützelements bietet ein besonders genaues axialen Positionieren der Bogenzahnkupplung. Durch die Stützelemente wird jeweils auch der Winkelversatz zwischen der Rotorwelle und der Ausgangswelle bestimmt. Ein entsprechend genaues axiales Positionieren der Bogenzahnkupplung erlaubt es, deren Verzahnungen in einem optimalen Eingriff zu halten, wodurch eine erhöhte Übertragung von Drehmoment ermöglicht wird und gleichzeitig die Winkeleinstellbarkeit gewährleistet ist. Ferner stützen das erste bzw. zweite Stützelement eine Axiallast ab, die auf die Ausgangswelle einwirkt. Die Axiallast, die auf die Ausgangswelle einwirkt, hängt davon an, welche Steigung eine Schrägverzahnung aufweist, durch die ein Drehmoment in die Ausgangswelle eingeleitet wird.

Des Weiteren kann in der Rotorwellenanordnung zumindest eine Stützfläche an der Ausgangswelle oder der Rotorwelle ausgebildet sein. Die Stützfläche ist zu einem Abstützen des zumindest einen Stützelements ausgebildet. Die Stützfläche ist ein Bereich der Ausgangswelle bzw. der Rotorwelle, der in puncto Formgebung und Härte zu einem Kontakt mit dem zumindest einen Stützelement geeignet ausgebildet ist. Die Stützfläche kann einstückig mit der Ausgangswelle bzw. der Rotorwelle ausgebildet sein oder als Bereich einer separaten lösbar montierten Komponente. Eine mit der Rotorwelle bzw. Ausgangswelle einstückig ausgebildete Stützfläche ist mit einer erhöhten Genauigkeit herstellbar, was ein präzises axiales Positionieren der Bogenzahnkupplung gewährleistet. Eine an einer separaten Komponente ausgebildete Stützfläche ermöglicht eine kosteneffiziente separate Fertigung und einfache Austauschbarkeit. Ferner kann dabei auch ein besonders leistungsfähiger und kostenintensiver Werkstoff anforderungsgerecht, und dementsprechend wirtschaftlich, eingesetzt werden.

In einer weiteren Weiterbildung der Rotorwellenanordnung ist die zumindest eine Stützfläche als Schulter im Bereich einer Bogenverzahnung, die zur Bogenzahnkupplung gehört, ausgebildet. Insbesondere kann die Schulter unmittelbar mit der Bogenverzahnung verbunden sein und/oder unmittelbar benachbart zu dieser angeordnet sein. Bogenverzahnungen können einstückig mit der Rotorwelle und/oder der Ausgangswelle ausgebildet sein, was eine besondere Beanspruchbarkeit der Bogenverzahnung gewährleistet. Beim Herstellen der Bogenverzahnung ist eine Schulter, die als Stützfläche geeignet ist, in einfacher Weise in einen vorhandenen Fertigungsprozess integrierbar. Ferner ist die Schulter dazu geeignet, eine belastungsgerechte Lasteinleitung in die Rotorwelle bzw. Ausgangswelle zu gewährleisten. Darüber hinaus sind Schultern an der Rotorwelle bzw. Ausgangswelle in puncto Krümmung anpassbar. Durch eine geeignete Formgebung der Schulter ist die Rotorwellenanordnung an unterschiedliche mechanische Beanspruchungen und unterschiedliche Platzerfordernisse anpassbar. Je länger die Schulter in Axialrichtung ausgebildet ist, umso geringer ist ein Spiel für die Winkeleinstellbarkeit der Bogenzahnkupplung. Die Rotorwellenanordnung ist dementsprechend skalierbar und weist ein breites Einsatzspektrum auf.

Des Weiteren kann in der Rotorwellenanordnung das zumindest eine lösbar befestigte Stützelement einen zumindest teilweise umlaufend konkav ausgebildeten Abschnitt der Gegenfläche zum axialen Positionieren der Bogenzahnkupplung aufweisen. Der konkav gebildete Abschnitt dient dabei als Gegenstück zur Stützfläche, die diesem gegenüberliegend angeordnet ist. Der zumindest teilweise umlaufende konkave Abschnitt des Stützelements kann mit einem Kugelabschnitt korrespondierend ausgebildet sein, also eine sphärisch ausgebildet sein. Eine derartige Formgebung des Stützelements erlaubt eine leichtgängige Winkeleinstellbarkeit zwischen der Rotorwelle und der Ausgangswelle und gleichzeitig eine vorteilhaft präzise axiale Positionierwirkung. Alternativ oder ergänzend kann die Stützfläche zumindest teilweise umlaufend konvex ausgebildet sein. Insbesondere kann die Stützfläche korrespondierend zum Stützelement konvex ausgebildet sein, so dass eine präzise Führung bei einem sich einstellenden Winkelversatz zwischen der Rotorwelle und der Ausgangswelle gewährleistet ist. Insbesondere kann die Stützfläche mit einem Kugelabschnitt korrespondierend ausgebildet sein, also eine sphärische Form aufweisen. Derartige Formen sind präzise und kosteneffizient herstellbar und bieten eine hohe mechanische Beanspruchbarkeit. Die zumindest teilweise umlaufend konvexe Stützfläche und/oder der zumindest teilweise umlaufend konkave Abschnitt des Stützelements können einen gemeinsamen Mittelpunkt aufweisen, der einer Kippachse der Bogenzahnkupplung entspricht. Dadurch wird insbesondere eine durchgehend leichtgängige Winkeleinstellbarkeit zwischen der Rotorwelle und der Ausgangswelle gewährleistet.

Ferner kann in der Rotorwellenanordnung die Ausgangswelle und/oder die Rotorwelle als Hohlwelle ausgebildet sein. Eine als Hohlwelle ausgebildete Ausgangswelle und/oder Rotorwelle erlaubt es, die jeweilige andere Welle aufzunehmen und/oder eine weitere Welle, wie beispielsweise ein Pitch-Rohr, durchzuführen. Die Rotorwellenanordnung kann dadurch in Axialrichtung kompakt ausgebildet werden. Ebenso ist ein Rotor in der Generatoreinheit so in Axialrichtung nahe an der Getriebeeinheit platzierbar. Die Rotorwelle kann ferner als separate Komponente ausgebildet werden, die in einfacher Weise mit weiteren Rotorkomponenten verbindbar ist.

In einer weiteren Ausführungsform der Rotorwellenanordnung ist die Bogenverzahnung an der Ausgangswelle als Außenverzahnung oder als Innenverzahnung ausgebildet. Korrespondierend dazu ist die Bogenverzahnung an der Rotorwelle als Innenverzahnung oder als Außenverzahnung ausgebildet. Eine derart ausgebildete Bogenzahnkupplung bietet in kompakter Weise eine hohe mechanische Beanspruchbarkeit zur Übertragung von Drehmoment und erlaubt eine einfache Montage.

Darüber hinaus können das zumindest eine Stützelement und die Stützfläche zumindest teilweise aus unterschiedlichen Werkstoffen hergestellt sein. Beispielsweise kann das Stützelement aus einem Gleitlagerwerkstoff hergestellt sein oder mit einem Gleitlagerwerkstoff versehen sein. Dies kann beispielsweise durch eine reibungsvermindernde Beschichtung umgesetzt werden. Bei einer Stützfläche, die beispielsweise aus einem Stahl oder einer Stahllegierung hergestellt ist, ergibt sich eine reduzierte Reibung zwischen der Stützfläche und dem Stützelement, was wiederum zu reduziertem Verschleiß führt.

Alternativ oder ergänzend können die Stützfläche und/oder das Stützelement wärmebehandelt sein, wodurch die dort vorliegende Reibung weiter reduziert wird. Darüber hinaus kann auch die Stützfläche zumindest teilweise aus einem Gleitlagerwerkstoff hergestellt sein oder mit Gleitlagerwerkstoff versehen sein.

In einer weiteren Ausführungsform der Rotorwellenanordnung kann die Ausgangswelle als eine Sonnenwelle einer Planetenstufe der Getriebeeinheit ausgebildet sein. Die Rotorwelle kann als Hohlwelle ausgebildet sein. Die Ausgangswelle bildet eine Außenverzahnung für die Bogenzahnkupplung aus, während die Rotorwelle eine Innenverzahnung für die Bogenzahnkupplung ausbildet. Die gesamte Bogenzahnkupplung ist dadurch radial innerhalb der Rotorwelle ausgebildet. Die Rotorwellenanordnung erlaubt es dadurch, die Getriebeeinheit in einfacher Weise mit der Generatoreinheit eines entsprechenden Getriebegenerators zu verbinden. Vorzugsweise sind die Getriebeeinheit ausgangsseitig über die Ausgangswelle und die Generatoreinheit eingangsseitig über die Rotorwelle unmittelbar, das heißt ohne dazwischengeschaltete drehmomentübertragende Bauteile, miteinander gekoppelt. Die Ausgangswelle kann in das Innere der als Hohlwelle ausgestalteten Rotorwelle teilweise eingeschoben sein, so dass die Rotorwelle in radialer Richtung betrachtet einen Teil der Ausgangswelle und insbesondere die gesamte Bogenverzahnung überdecken kann. Insbesondere ist die Rotorwelle unmittelbar mit dem Rotor verbunden auf der Ausgangswelle montierbar. Eine aufwendige Handhabung der gesamten Generatoreinheit, die auch ein Gehäuse umfasst, wird so vermieden. Die Herstellung eines Getriebegenerators mit Getriebeeinheit und Generatoreinheit wird folglich beschleunigt, und ist dadurch kosteneffizient durchführbar. Die Getriebeeinheit ist dazu geeignet, unmittelbar, also frei von einer separaten Kupplung, mit einer Generatoreinheit zu einem Generatorgetriebe verbunden zu werden, so dass diese eine integrierte Einheit bilden. Die Getriebeeinheit umfasst insbesondere zumindest eine Planetenstufe, also eine Getriebestufe die als Planetengetriebe ausgebildet ist. Die zumindest eine Planetenstufe weist eine Welle auf, die mit einer drehbaren Getriebekomponente, also einem Sonnenrad, einem Planetenträger oder einem Hohlrad der Planetenstufe, verbunden ist und als Ausgangswelle der Getriebeeinheit dient. An der Ausgangswelle ist an einem der Generatoreinheit zugewandten Abschnitt eine Bogenverzahnung ausgebildet, die zu einem Bilden einer Bogenzahnkupplung geeignet ist. In einem Bereich der Bogenverzahnung ist zumindest eine Stützfläche ausgebildet, die die einem einstellbeweglichen axialen Positionieren der Bogenverzahnung in der Bogenzahnkupplung geeignet ist. Unter einem einstellbeweglichen axialen Positionieren ist zu verstehen, dass durch die Bogenzahnkupplung ein Winkelversatz zwischen der Ausgangswelle und einer damit im montierten Zustand verbunden Rotorwelle ausgleichbar ist. Die Einstellbeweglichkeit kann dabei eine Winkeleinstellbeweglichkeit sein. Unter dem axialen Positionieren ist ferner ein Halten der Bogenverzahnung in einer Position zu verstehen, die eine leichtgängige Winkeleinstellbarkeit zwischen der Ausgangswelle und der Rotorwelle gewährleistet. Die Getriebeeinheit ist dazu mit einer Rotorwellenanordnung gemäß zumindest einer der oben skizzierten Ausführungsformen kombiniert ausgebildet.

Bei einer Ausgangswelle, die als Sonnenwelle einer Planetenstufe ausgebildet ist, wird durch die Rotorwellenanordnung für die Ausgangswelle eine vorteilhafte Winkeleinstellbarkeit erzielt. Dementsprechend ist eine sich selbsttätig einstellende vorteilhafte Ausrichtung der Sonnenwelle erzielbar, bei der eine gleichmäßige Lastverteilung Planetenräder erreicht wird, die mit der Sonnenwelle kämmen. Dadurch wird Verschleiß in der Getriebeeinheit minimiert.

Vorzugsweise weist die Getriebeeinheit drei oder mehr hintereinandergeschaltete Planetenstufen auf. Eine Hintereinanderschaltung ist hierbei eine drehmomentübertragende Verbindung zwischen den Planetenstufen, durch die eine in die Getriebeeinheit zugeführte Antriebsleistung unverzweigt durchgeführt wird. Derartige Hintereinanderschaltungen sind unter anderem in der Internationalen Anmeldung WO 2020/001942 A1 offenbart.

Die Getriebeeinheit bietet ein hohes Maß an mechanischer Leistungsfähigkeit bei gleichzeitig kompakter Bauform, reduziertem Gewicht und hoher Wirtschaftlichkeit.

Darüber hinaus wird die zugrundeliegende Aufgabenstellung durch ein nicht beanspruchtes Computerprogrammprodukt gelöst, das zu einem Simulieren eines Betriebsverhaltens einer Rotorwellenanordnung ausgebildet ist. Dazu kann das Computerprogrammprodukt Daten zur Kinematik der Ausgangswelle, der Rotorwelle und der Bogenzahnkupplung umfassen. Ferner kann das Computerprogrammprodukt Simulationsroutinen umfassen, die dazu ausgebildet sind, basierend auf Angaben zu Abmessungen der Rotorwelle, der Ausgangswelle und/oder der Bogenzahnkupplung ein Schwingungsverhalten der Rotorwellenanordnung zu ermitteln. Das Computerprogrammprodukt kann auch eine Datenschnittstelle aufweisen, über die Betriebsparameter, wie beispielsweise eine Drehzahl der Ausgangswelle, ein über die Ausgangswelle transportiertes Drehmoment, oder Ausrichtung der Ausgangswelle vorgebbar sind. Ebenso kann das Computerprogrammprodukt auch eine Datenschnittstelle zum Ausgeben von Simulationsergebnissen aufweisen. Erfindungsgemäß ist die Rotorwellenanordnung, deren Betriebsverhalten mittels des Computerprogrammprodukts simulierbar ist, gemäß mindestens einer der oben skizzierten Ausführungsformen ausgebildet. Das Computerprogrammprodukt kann dazu beispielsweise als sogenannter Digitaler Zwilling ausgebildet sein. Derartige Digitale Zwillinge sind unter anderem in der Offenlegungsschrift US 2017/0286572 A1 dargestellt.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform einer

- FIG 2: Rotorwellenanordnung im Längsschnitt; einen schematischen Aufbau einer ersten Ausführungsform eines Generatorgetriebes;
- FIG 3: eine erste Ausführungsform der beanspruchten Windkraftanlage in einer geschnittenen Schrägansicht.

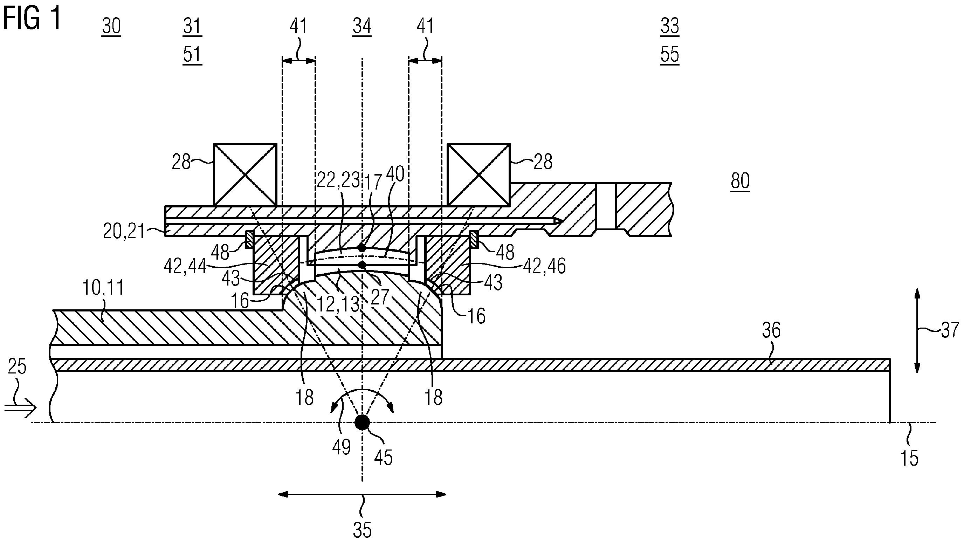

In FIG 1 ist schematisch ein Längsschnitt einer ersten Ausführungsform einer Rotorwellenanordnung 30 dargestellt, die eine Ausgangswelle 10 umfasst, die als Hohlwelle 11 ausgebildet ist, und eine Rotorwelle 20, die auch als Hohlwelle 21 ausgebildet ist und in Rotorwellenlagern 28 an einem nicht näher dargestellten Gehäuse 34 drehbar aufgenommen ist. Über die Ausgangswelle 10 wird bezogen auf eine Hauptdrehachse 15 ein Drehmoment 25 zugeführt, das auf die Rotorwelle 20 zu übertragen ist. Die Ausgangswelle 10 ist einer nicht näher dargestellten Getriebeeinheit 51 auf einer Getriebeseite 31 zugeordnet und die Rotorwelle 20 einer nicht näher gezeigten Generatoreinheit 53 auf einer Generatorseite 33. Die Ausgangswelle 10 ist an einem der Generatorseite 33 zugewandten Ende mit einer Bogenverzahnung 12 versehen, die als Außenverzahnung 13 ausgebildet ist. Die Rotorwelle 20 ist korrespondierend mit einer Bogenverzahnung 22 versehen, die als Innenverzahnung 23 ausgebildet ist und mit der Bogenverzahnung 12 der Rotorwelle 10 kämmt. Die Bogenverzahnungen 12, 22 an der Ausgangswelle 10 und der Rotorwelle 20 gehören damit zu einer Bogenzahnkupplung 40, die um einen Drehpunkt 45 einen Winkelversatz zwischen der Ausgangswelle 10 und der Rotorwelle 20 erlaubt. Der Winkelversatz kann sich dabei jeweils für die Ausgangswelle 10 und die Rotorwelle 20 bezogen auf die Hauptdrehachse 15 einstellen. Dadurch wird eine Winkeleinstellbeweglichkeit 49 erzielt, die in FIG 1 durch den entsprechend bezeichneten Doppelpfeil versinnbildlicht ist. In einem optimal ausgerichteten Zustand, wie in FIG 1 gezeigt, sind ein Scheitelpunkt 17 der Bogenverzahnung 12 an der Ausgangswelle 10 und ein Scheitelpunkt 27 der Bogenverzahnung 22 an der Rotorwelle 20 in eine Radialrichtung 37 im Wesentlichen fluchtend positioniert.

Die Bogenzahnkupplung 40 umfasst auch Stützelemente 42, die umlaufend ausgebildet sind und im Bereich der Bogenverzahnungen 12, 22 angeordnet sind. Im montierten Zustand sind die Stützelemente 42 mit Sicherungsringen 48 befestigt. Die Stützelemente 42 sind lösbar montiert, wobei eine erstes Stützelement 44, bezogen auf die Bogenzahnkupplung 40, auf der Getriebeseite 31 angeordnet ist und eine zweites Stützelement 46 auf der Generatorseite 33. Durch das Anordnen der Stützelemente 42, 44, 46 in einem Bereich 41 der Bogenverzahnungen 12, 22 wird die Winkeleinstellbeweglichkeit 49, also der maximal erreichbare Winkelversatz, bestimmt. Die Stützelemente 42, 44, 46 verfügen jeweils über eine Gegenfläche 43, die umlaufend und im Wesentlichen konkav ausgebildet ist, und einer Stützfläche 16 an der Ausgangwelle 10 gegenüberliegend angeordnet ist. Die Stützflächen 16 sind einstückig mit der Ausgangswelle 10 ausgebildet und gehören jeweils zu einer Schulter 18, die auch einstückig mit der Ausgangswelle 10 ausgebildet ist. Die Stützflächen 16 sind jeweils im Wesentlichen konvex ausgebildet, wobei die Form der Stützflächen 16 mit der konkaven Form der Gegenflächen 43 an der Rotorwelle 20 korrespondieren. Die Stützflächen 16 und die Gegenflächen 43 sind sphärisch ausgebildet und weisen den Drehpunkt 45 der Winkeleinstellbarkeit 49 als Mittelpunkt auf. Eine derartige sphärische Form der Bogenzahnkupplung 40 bietet für die Winkeleinstellbarkeit 49 eine besondere Leichtgängigkeit. Fernern ist zumindest eines der Stützelemente 42, 44, 46 im Bereich der Gegenfläche 43 aus einem anderen Werkstoff als eine korrespondierende Stützfläche 16 an der Ausgangswelle 10 hergestellt sein. Zumindest eines der Stützelemente 42, 44, 46 ist aus einem Gleitlagerwerkstoff hergestellt, durch die Reibung zwischen der entsprechenden Stützfläche 16 und der Stützelement 42, 44, 46 minimiert wird. Des Weiteren wird die Bogenzahnkupplung 40, also die Bogenverzahnungen 12, 22 an der Ausgangswelle 10 und der Rotorwelle 20 entlang einer Axialrichtung 35 durch die Stützelemente 42, 44, 46 positioniert. Das axiale Positionieren durch die Stützelemente 42, 44, 46 gewährleistet, dass die Bogenverzahnungen 12, 22 in der Breite, also ihrer Abmessung entlang der Axialrichtung 35, minimiert wird. Dadurch ist gewährleistet, dass eine maximale Überdeckung der Bogenverzahnungen 12, 22 im Eingriff, also beim Kämmen, vorliegt. Dementsprechend genügt eine minimale Breite für die Bogenverzahnungen 12, 22. Ferner ist in der als Hohlwelle 11 ausgebildeten Ausgangswelle 10 ein Pitchrohr 36 drehbar aufgenommen. Eine generatorseitige Stirnseite 14 der Ausgangswelle 10 liegt entlang der Axialrichtung 35 im Bereich der Rotorwelle 20. Die Ausgangswelle 10 ist damit auf der Generatorseite 33 lagerfrei angeordnet, das wiederum die Anzahl an Bauteilen in der Rotorwellenanordnung 30 reduziert und deren Montage vereinfacht. Die Rotorwellenanordnung 30 in FIG 1 ist ferner in einem Computerprogrammprodukt 80 nachgebildet, das dazu ausgebildet ist, das Betriebsverhalten der Rotorwellenanordnung 30 zu simulieren.

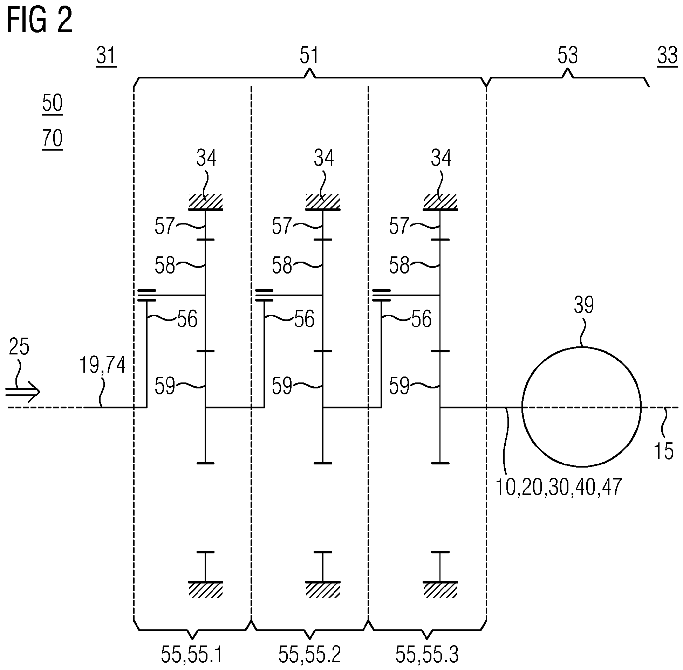

Eine erste Ausführungsform eines Generatorgetriebes 50 ist in FIG 2 in ihrem Aufbau schematisch abgebildet. Das Generatorgetriebe 50 umfasst eine Getriebeeinheit 51, die lösbar mit einer Generatoreinheit 53 verbunden ist. Die Getriebeeinheit 51 umfasst drei Planetenstufen 55, die hintereinandergeschaltet sind, so dass ein Drehmoment 25, das über eine Eingangswelle 19 zugeführt wird, zwischen den Planetenstufen 55 unverzweigt zur Generatoreinheit 53 transportiert wird. Die Eingangswelle 19 ist um eine Hauptdrehachse 15 des Generatorgetriebes 50 drehbar und ist dabei als eine Hauptwelle 74 einer nicht näher gezeigten Windkraftanlage 70 ausgebildet. Die erste, zweite und dritte Planetenstufe 55.1, 55.2, 55.3 weisen jeweils ein Hohlrad 57, einen Planetenträger 56 mit mindestens einem Planetenrad 58, und ein Sonnenrad 59 auf. Die Hohlräder 57 sind in einem Gehäuse 34 befestigt, das die Getriebeeinheit 51 zumindest teilweise umschließt. Das zugeführte Drehmoment 25 wird dementsprechend von der Getriebeseite 31 in Richtung der Generatorseite 33 transportiert, wobei eine Ausgangswelle 10 der Getriebeeinheit 51 mit einem Generator 39 auf der Generatoreinheit 53 drehmomentübertragend verbunden ist. Die Ausgangswelle 10 ist als eine Sonnenwelle 47 einer der Planetenstufen 55, insbesondere der dritten Planetenstufe 55.3, ausgebildet. Ferner gehört die Ausgangswelle 10 zu einer Rotorwellenanordnung 30, die auch eine Rotorwelle 20 umfasst, wobei die Ausgangswelle 10 und die Rotorwelle 20 mittels einer Bogenzahnkupplung 40 miteinander verbunden sind. Die Rotorwellenanordnung 30 ist dabei gemäß einer der oben beschriebenen Ausführungsformen ausgebildet. Eine Getriebeeinheit 51 mit drei Planetenstufen 55, 55.1, 55.2, 55.3, die über eine als Ausgangswelle 10 dienende Sonnenwelle 47 unmittelbar mit einem Generator 39 verbunden ist, bietet ein besonderes Maß an Leistungsfähigkeit, Wirtschaftlichkeit und Zuverlässigkeit für eine Windkraftanlage 70.

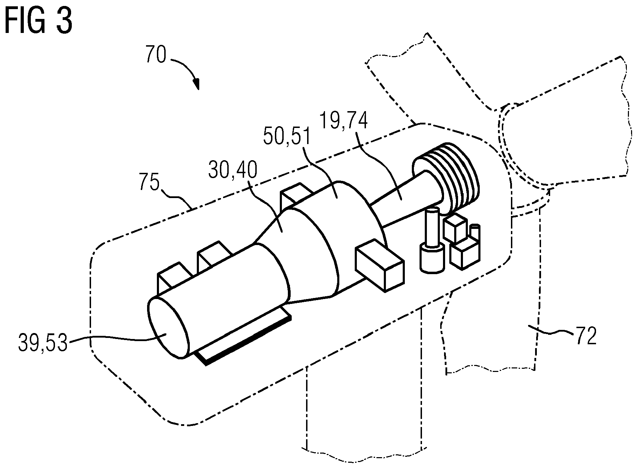

FIG 3 zeigt den Aufbau einer ersten Ausführungsform einer beanspruchten Windkraftanlage 70 in einer geschnittenen Schrägansicht. Die Windkraftanlage 70 umfasst einen Mehrblattrotor 72, der drehbar an einer Gondel 75 angebracht ist und drehmomentübertragend mit einer Hauptwelle 74 verbunden ist. Die Hauptwelle 75 dient als Eingangswelle 19 eines Generatorgetriebes 50, das eine Getriebeeinheit 51 und eine Generatoreinheit 53 mit einem Generator 39 umfasst. Die Getriebeeinheit 51 und die Generatoreinheit 53 sind über eine Rotorwellenanordnung 30 drehmomentübertragend miteinander verbunden. Die Rotorwellenanordnung 30 umfasst eine Bogenzahnkupplung 40, durch die eine Winkeleinstellbarkeit 49 zwischen der Getriebeeinheit 51 und der Generatoreinheit 53 gewährleistet ist. Die Rotorwellenanordnung 30 ist dabei gemäß zumindest einer der oben skizzierten Ausführungsformen ausgebildet.

## Patentansprüche

1. Windkraftanlage (70), umfassend einen Mehrblattrotor (72), der drehbar an einer Gondel (75) angeordnet ist und über eine Hauptwelle (74) mit einem Generatorgetriebe (50) drehmomentübertragend verbunden ist, wobei das Generatorgetriebe eine Getriebeeinheit (51) und eine damit lösbar verbundene Generatoreinheit (53), die drehmomentübertragend über eine Rotorwellenanordnung (30) miteinander verbunden sind, umfasst und die Rotorwellenanordnung (30) eine Ausgangswelle (10) für die Getriebeeinheit (51) und eine Rotorwelle (20) für die Generatoreinheit (53), die über eine Bogenzahnkupplung (40) miteinander verbunden sind, umfasst, **dadurch gekennzeichnet, dass** die Bogenzahnkupplung (40) zumindest ein lösbar befestigtes Stützelement (42,44,46) zu einem axialen Positionieren der Bogenzahnkupplung (40) aufweist, wobei das mindestens eine Stützelement (42,44,46) eine Axialkräfte der Bogenzahnkupplung (40) abstützende Gegenfläche aufweist, wobei die Gegenfläche bei einem Verkippen der Ausgangswelle (10) relativ zur Rotorwelle an einer korrespondierenden Stützfläche (16) der Ausgangswelle (10) oder der Rotorwelle (20) abgleitbar ausgestaltet ist.

2. Windkraftanlage (70) nach Anspruch 1, **dadurch gekennzeichnet, dass** ein erstes Stützelement (44) des zumindest einen Stützelements (42,44,46) auf einer der Getriebeeinheit (51) zugewandten Seite (31) der Bogenzahnkupplung (40) angeordnet ist.

3. Windkraftanlage (70) nach Anspruch 1 oder 2, **da-durch gekennzeichnet**, dass ein zweites Stützelement (46) des zumindest einen Stützelements (42,44,46) auf einer der Generatoreinheit (53) zugewandten Seite (33) der Bogenzahnkupplung (40) angeordnet ist.

4. Windkraftanlage (70) nach der Kombination der Ansprüche 2 und 3, **dadurch gekennzeichnet, dass** das erste Stützelement (44) und das zweite Stützelement (46) mit den zugeordneten Stützflächen (16) eine Kugelgelenklagerung für die Bogenzahnkupplung (40) ausbilden.

5. Windkraftanlage (70) nach einem der Ansprüche 1 bis 4, **dadurch gekennzeichnet, dass** das zumindest eine Stützelement (42,44,46) ein zum Ausgleich von im laufenden Betrieb zu erwartenden axialen Wärmedehnungen ausgleichendes axiales Spiel der Ausgangswelle (10) relativ zur Rotorwelle (20) ausbildet.

6. Windkraftanlage (70) nach einem der Ansprüche 1 bis 5, **dadurch gekennzeichnet, dass** die Ausgangswelle (10) mit der Rotorwelle (20) durch das mindestens eine Stützelement (42, 44, 46) verliersicher gekoppelt ist.

7. Windkraftanlage (70) nach einem der Ansprüche 1 bis 6, **dadurch gekennzeichnet, dass** die zumindest eine Stützfläche (16) als Schulter (18) im Bereich einer Bogenverzahnung (12,22) ausgebildet ist, wobei insbesondere die Schulter (18) unmittelbar mit der Bogenverzahnung (12, 22) verbunden ist und/oder unmittelbar benachbart zu der Bogenverzahnung (12, 22) angeordnet ist.

8. Windkraftanlage (70) nach einem der Ansprüche 1 bis 7, **dadurch gekennzeichnet, dass** die zumindest eine Stützfläche (16) zumindest teilweise umlaufend konvex, insbesondere als ringförmige Kugelkalotte, ausgebildet ist.

9. Windkraftanlage (70) nach einem der Ansprüche 1 bis 8, **dadurch gekennzeichnet, dass** das das zumindest eine Stützelement (42,44,46) und die Stützfläche (16) zumindest teilweise aus unterschiedlichen Werkstoffen hergestellt sind.

10. Windkraftanlage (70) nach einem der Ansprüche 1 bis 9, **dadurch gekennzeichnet, dass** das zumindest eine lösbar befestigte Stützelement (42,44,46) einen zumindest teilweise umlaufend konkav ausgebildeten Abschnitt der Gegenfläche zum axialen Positionieren der Bogenzahnkupplung (40) aufweist.

11. Windkraftanlage (70) nach einem der Ansprüche 1 bis 10, **dadurch gekennzeichnet, dass** die Ausgangswelle (10) als eine Sonnenwelle (47) einer Planetenstufe (55,55.1,55.2,55.3) der Getriebeeinheit (51) und die die Rotorwelle (20) als Hohlwelle (11,21) ausgebildet sind, wobei die Ausgangswelle (10) eine Außenverzahnung (13) für die Bogenzahnkupplung (40) und die Rotorwelle (20) eine Innenverzahnung (23) für die Bogenzahnkupplung (40) ausbildet, wobei die gesamte Bogenzahnkupplung (40) radial innerhalb der Rotorwelle (20) ausgebildet ist.

12. Windkraftanlage (70) nach einem der Ansprüche 1 bis 11 **dadurch gekennzeichnet, dass** die Getriebeeinheit (51) zumindest eine Planetenstufe (55,55.1,55.2,55.3) mit der Ausgangswelle (10) umfasst, an der die Bogenverzahnung (12,22) ausgebildet ist, wobei im Bereich der Bogenverzahnung (12,22) zumindest eine Stützfläche (16) zu einem winkelbeweglichen axialen Positionieren der Bogenverzahnung (12,22) in einer Bogenzahnkupplung (40) ausgebildet ist.

## Claims

1. Wind turbine (70), comprising a multi-blade rotor (72) which is rotatably disposed on a nacelle (75) and via a main shaft (74) is connected in a torque-transmitting manner to a generator gearbox, wherein the generator gearbox comprises a gearbox unit (51) and a generator unit (53) connected releasably thereto, said gearbox unit and generator unit being connected to one another in a torque-transmitting manner via a rotor shaft arrangement (30), and the rotor shaft arrangement (30) comprises an output shaft (10) for the gearbox unit (51) and a rotor shaft (20) for the generator unit (53), which via a curved tooth coupling (40) are connected to one another, **characterized in that** the curved tooth coupling (40) has at least one releasably fastened supporting element (42, 44, 46) for axially positioning the curved tooth coupling (40), the at least one supporting element (42, 44, 46) having a mating face that supports axial forces of the curved tooth coupling (40), the mating face being designed such that it can slide on a corresponding support face (16) of the output shaft (10) or of the rotor shaft (20) when the output shaft (10) is tilted relative to the rotor shaft.

2. Wind turbine (70) according to Claim 1, **characterized in that** a first supporting element (44) of the at least one supporting element (42, 44, 46) is disposed on a side (31) of the curved tooth coupling (40) that faces the gearbox unit (51).

3. Wind turbine (70) according to Claim 1 or 2, **characterized in that** a second supporting element (46) of the at least one supporting element (42, 44, 46) is disposed on a side (33) of the curved tooth coupling (40) that faces the generator unit (53).

4. Wind turbine (70) according to the combination of Claims 2 and 3, **characterized in that** the first supporting element (44) and the second supporting element (46) conjointly with the assigned support faces (16) form a ball joint bearing for the curved tooth coupling (40).

5. Wind turbine (70) according to one of Claims 1 to 4, **characterized in that** the at least one supporting element (42, 44, 46) develops a compensating axial clearance of the output shaft (10) relative to the rotor shaft (20) for compensating for axial thermal expansions to be anticipated during the ongoing operation.

6. Wind turbine (70) according to one of Claims 1 to 5, **characterized in that** the output shaft (10) is captively coupled to the rotor shaft (20) by the at least one supporting element (42, 44, 46).

7. Wind turbine (70) according to one of Claims 1 to 6, **characterized in that** the at least one support face (16) is designed as a shoulder (18) in the region of a curved toothing (12, 22), the shoulder (18) in particular being directly connected to the curved toothing (12, 22) and/or being disposed directly adjacent to the curved toothing (12, 22).

8. Wind turbine (70) according to one of Claims 1 to 7, **characterized in that** the at least one support face (16) is at least partially configured so as to be convex in an encircling manner, in particular as an annular spherical cap.

9. Wind turbine (70) according to one of Claims 1 to 8, **characterized in that** the at least one supporting element (42, 44, 46) and the support face (16) are at least partially produced from dissimilar materials.

10. Wind turbine (70) according to one of Claims 1 to 9, **characterized in that** the at least one releasably fastened supporting element (42, 44, 46), for axially positioning the curved tooth coupling (40), has a portion of the mating face that is at least partially configured so as to be concave in an encircling manner.

11. Wind turbine (70) according to one of Claims 1 to 10, **characterized in that** the output shaft (10) is configured as a sun shaft (47) of a planetary stage (55, 55.1, 55.2, 55.3) of the gearbox unit (51) and the rotor shaft (20) is configured as a hollow shaft (11, 21), the output shaft (10) configuring an external toothing (13) for the curved tooth coupling (40) and the rotor shaft (20) configuring an internal toothing (23) for the curved tooth coupling (40), the entire curved tooth coupling (40) being configured radially inside the rotor shaft (20) .

12. Wind turbine (70) according to one of Claims 1 to 11, **characterized in that** the gearbox unit (51) comprises at least one planetary stage (55, 55.1, 55.2, 55.3) with the output shaft (10), on which the curved toothing (12, 22) is configured, in the region of the curved toothing (12, 22) at least one support face (16) being configured for angularly mobile axial positioning of the curved toothing (12, 22) in a curved tooth coupling (40).

## Revendications

1. Éolienne (70) comprenant un rotor (72) à plusieurs pales qui est disposé de manière rotative sur une nacelle (75) et qui est relié en transmission de couple à une transmission de générateur (50) par le biais d'un arbre principal (74), la transmission de générateur comprenant une unité de transmission (51) et une unité de générateur (53) qui est reliée de manière amovible à ladite unité de transmission, lesquelles unités sont reliées l'une à l'autre en transmission de couple par le biais d'un ensemble formant arbre de rotor (30), et l'ensemble formant arbre de rotor (30) comprenant un arbre de sortie (10) destinée à l'unité de transmission (51) et un arbre de rotor (20) destiné à l'unité de générateur (53), lesquels arbres sont reliés entre eux par un accouplement à denture sphérique (40), **caractérisé en ce que** l'accouplement à denture sphérique (40) comporte au moins un élément de support (42, 44, 46) fixé de manière amovible et destiné à positionner axialement l'accouplement à denture sphérique (40), l'au moins un élément de support (42, 44, 46) comportant une surface antagoniste qui supporte des forces axiales de l'accouplement à denture sphérique (40), la surface antagoniste étant conçue pour pouvoir glisser sur une surface de support correspondante (16) de l'arbre de sortie (10) ou de l'arbre de rotor (20) lorsque l'arbre de sortie (10) est incliné par rapport à l'arbre de rotor.

2. Éolienne (70) selon la revendication 1, **caractérisée en ce qu'**un premier élément de support (44) de 'l'au moins un élément de support (42, 44, 46) est disposé sur un côté (31) de l'accouplement à denture sphérique (40) qui est dirigé vers l'unité de transmission (51).

3. Éolienne (70) selon la revendication 1 ou 2, **caractérisée en ce qu'**un deuxième élément de support (46) de l'au moins un élément de support (42, 44, 46) est disposé sur un côté (33) de l'accouplement à denture sphérique (40) qui est dirigé vers l'unité de générateur (53).

4. Éolienne (70) selon la combinaison des revendications 2 et 3, **caractérisée en ce que** le premier élément de support (44) et le deuxième élément de support (46) forment avec les surfaces de support (16) associées un palier à rotule destiné à l'accouplement à denture sphérique (40).

5. Éolienne (70) selon l'une des revendications 1 à 4, **caractérisée en ce que** l'au moins un élément de support (42, 44, 46) présente un jeu axial de l'arbre de sortie (10) par rapport à l'arbre de rotor (20), lequel jeu compense des dilatations thermiques axiales à prévoir pendant le fonctionnement.

6. Éolienne (70) selon l'une des revendications 1 à 5, **caractérisée en ce que** l'arbre de sortie (10) est accouplé de manière imperdable à l'arbre de rotor (20) par le biais de l'au moins un élément de support (42, 44, 46) .

7. Éolienne (70) selon l'une des revendications 1 à 6, **caractérisée en ce que** l'au moins une surface de support (16) est conçue comme un épaulement (18) au niveau d'une denture sphérique (12, 22), en particulier l'épaulement (18) étant relié directement à la denture sphérique (12, 22) et/ou est étant disposé de manière immédiatement adjacente à la denture sphérique (12, 22) .

8. Éolienne (70) selon l'une des revendications 1 à 7, **caractérisée en ce que** l'au moins une surface de support (16) est convexe, notamment sous la forme d'une calotte sphérique annulaire, au moins sur une partie de la circonférence.

9. Éolienne (70) selon l'une des revendications 1 à 8, **caractérisée en ce que** l'au moins un élément de support (42, 44, 46) et la surface de support (16) sont au moins partiellement en des matériaux différents.

10. Éolienne (70) selon l'une des revendications 1 à 9, **caractérisée en ce que** l'au moins un élément de support (42, 44, 46) fixé de manière amovible comporte une portion de la surface antagoniste destinée à positionner axialement l'accouplement à denture sphérique (40), laquelle portion a une forme concave au moins sur une partie de la circonférence.

11. Éolienne {70} selon l'une des revendications 1 à 10, **caractérisée en ce que** l'arbre de sortie (10) est conçu comme un arbre solaire (47) d'un étage planétaire (55, 55.1, 55.2, 55.3) de l'unité de transmission (51) et l'arbre de rotor (20) est conçue comme un arbre creux (11, 21), l'arbre de sortie (10) formant une denture extérieure (13) destinée à l'accouplement à denture sphérique (40) et l'arbre de rotor (20) formant une denture intériente (23) destinée à l'accouplement à denture sphérique (40), Tout l'accouplement à denture sphérique (40) étant formé radialement à l'intérieur de l'arbre de rotor (20).

12. Éolienne (70) selon l'une des revendications 1 à 11, **caractérisée en ce que** l'unité de transmission (51) comprend au moins un étage planétaire (55, 55.1, 55.2, 55.3) incluant l'arbre de sortie (10) sur lequel est formée la denture sphérique (12, 22), au moins une surface de support (16) étant conçue, dans la zone de la denture sphérique (12, 22), pour positionner axialement, de manière mobile angulairement, la denture sphérique (12, 22) dans un accouplement à denture sphérique (40).
